# FASCICULE DE BREVET EUROPEEN

(11) **EP 3 093 536 B1**
(45) Date de publication et mention de la délivrance du brevet: **21.03.2018**
(21) Numéro de dépôt: 16164850.6
(22) Date de dépôt: 12.04.2016
(51) Int. Cl.: F16H 61/26, F16H 61/34, F16H 61/36, F16H 63/30

(54) **DISPOSITIF DE SÉLECTION DE VITESSE D'UNE BOITE DE VITESSES D'UN VÉHICULE**
VORRICHTUNG ZUR GESCHWINDIGKEITSAUSWAHL EINES GETRIEBES EINES FAHRZEUGS
GEAR SELECTOR DEVICE FOR A GEARBOX OF A VEHICLE

(30) Priorité: 12.05.2015 FR 1554215
(43) Date de publication de la demande: 16.11.2016
(73) Titulaire: PSA Automobiles SA, 78300 Poissy (FR)
(72) Inventeur: PLOE, Pierre, 92800 PUTEAUX (FR)
(74) Mandataire: Rosenberg, Muriel Sylvie

(56) Documents cités:
- DE-A1- 4 020 608
- DE-A1- 10 319 705
- DE-U1-202008 000 715
- US-A- 4 879 922

## Description

L'invention concerne un dispositif de sélection de vitesse d'une boîte de vitesses d'un véhicule, notamment automobile.

On connait un tel dispositif comprenant un levier de sélection de vitesse en forme générale de bloc, relié mécaniquement au levier de changement de vitesses dans l'habitacle du véhicule par l'intermédiaire d'un câble ou d'une tringlerie de commande. Ce levier de sélection est monté pivotant, par exemple sur un dispositif de palier long avec deux bagues de glissement ou sur un système de palier long graissé. Ce dispositif de palier long nécessite de gérer des cotes précises d'une part sur l'alésage du levier de sélection et l'axe de support formant palier solidaire du carter de la boîte de vitesses, et d'autre part sur la longueur de ces alésage et axe de palier pour limiter le débattement axial du levier de sélection. Ce débattement axial provoque, lorsque la boîte de vitesses se trouve sur les rapports de 3^{ème} ou 4^{ème} vitesse ou au point mort et que le levier de sélection n'est pas actif ou sous tension, des remontées de vibrations du moteur jusqu'au pommeau de levier de changement de vitesses. En outre, ce dispositif de sélection connu est encombrant axialement.

Dans le document FR 2798096, il est décrit une platine pour une commande de vitesses comprenant notamment un levier de sélection de vitesse, solidaire par surmoulage d'un moyeu en une matière plastique rigide monté tournant sur un axe solidaire du carter de la boîte de vitesse d'un véhicule. Cependant, cette solution reste encombrante du fait de la longueur relativement importante de l'axe formant palier. Le document DE 40 20 608 A1 divulgue un dispositif comprenant toutes les caractéristiques du préambule de la revendication 1.

La présente invention a pour but de pallier les inconvénients de l'art antérieur.

Pour atteindre ce but, le dispositif de sélection de vitesse selon l'invention est caractérisé en ce que le levier de sélection est formé par une plaque de tôle plane, montée perpendiculairement à l'axe de pivotement entre deux flasques parallèles, montés fixes sur l'axe de pivotement et axialement écartés l'un de l'autre par une entretoise montée fixe et concentriquement sur l'axe de pivotement d'une distance permettant au levier de sélection de pivoter, sous faible jeu entre les deux flasques parallèles, autour de l'entretoise.

Selon une variante de réalisation, le dispositif est caractérisé en ce que la plaque de tôle plane du levier de sélection est laminée à froid.

Selon une autre variante de réalisation, le dispositif est caractérisé en ce que l'entretoise est monobloc avec l'un des deux flasques parallèles.

Selon une autre variante de réalisation, le dispositif est caractérisé en ce que l'entretoise et les flasques parallèles sont des pièces distinctes.

Selon une autre variante de réalisation, le dispositif est caractérisé en ce qu'une bague de glissement est interposée entre l'entretoise et un perçage interne de la plaque de tôle plane du levier de sélection.

Selon une autre variante de réalisation, le dispositif est caractérisé en ce que la bague de glissement est solidaire de la plaque de tôle plane.

Selon une autre variante de réalisation, le dispositif est caractérisé en ce que chaque flasque est une rondelle coaxiale à l'axe de pivotement.

Selon une autre variante de réalisation, le dispositif est caractérisé en ce que l'axe de pivotement est une vis enserrant les flasques parallèles entre une partie du carter de la boîte de vitesses et la tête de la vis.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- La figure 1 illustre une vue en perspective d'un levier de sélection de vitesse selon l'invention, associé à un levier de passage de vitesse montés sur le carter d'une boîte de vitesses d'un véhicule automobile ;
- La figure 2 illustre une vue en coupe du levier de sélection de vitesse dans le plan contenant la ligne II-II de la figure 1.

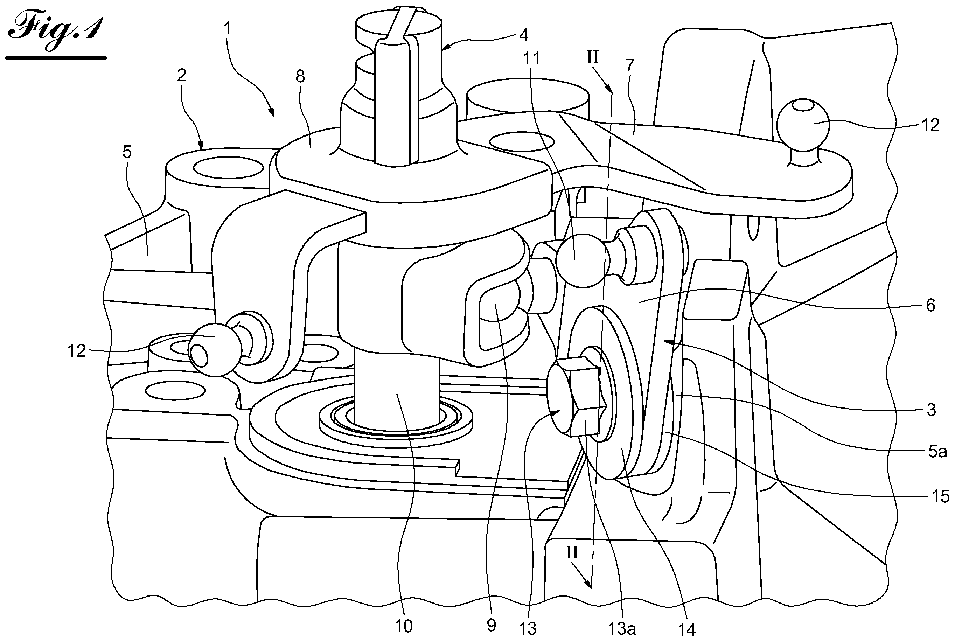

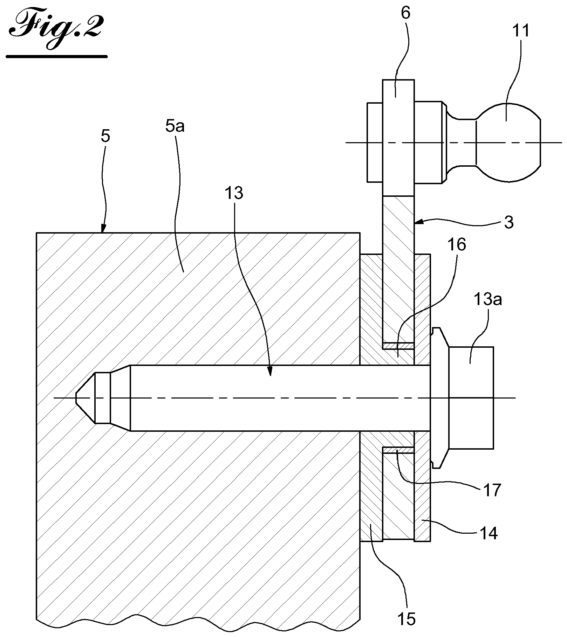

En référence aux figures 1 et 2, la référence 1 désigne un système de sélection et de passage de vitesse au sein d'une boite de vitesse 2, partiellement représentée, d'un véhicule notamment automobile.

Le système 1 comprend un dispositif de sélection 3 de vitesse et un dispositif de passage 4 de vitesse montés sur le carter 5 de la boîte de vitesses 2.

Le dispositif de sélection 3 de vitesse comprend un levier de sélection 6 de vitesse monté à pivotement sur le carter 5 de la boîte de vitesses 2 comme on le verra ultérieurement.

Le dispositif de passage 4 de vitesse comprend un levier 7 de passage de vitesse qui est accouplé, via un moyeu 8 du levier de passage 7 de vitesse, au levier de sélection 6 de vitesse par une rotule 9 solidaire du levier 6, et un axe de sélection et de passage 10 d'une vitesse dans la boîte de vitesses 2.

Les leviers de sélection 6 et de passage 7 de vitesse sont à pivotement commandés par des câbles ou des tringles d'une commande externe reliés entre des rotules 11 et 12 de ces leviers et le levier de changement de vitesse dans l'habitacle du véhicule.

Le levier de sélection 6 de vitesse, lorsque commandé à pivotement, fait translater l'axe de passage 10 de vitesse pénétrant à l'intérieur de la boîte de vitesses 2, via le moyeu de sélection 8 de ce levier de passage 7, afin de permettre la sélection de la fourchette de passage de vitesse à actionner à l'intérieur de la boîte de vitesses 2, et le levier de passage 7 est actionné en rotation pour déplacer les fourchettes à l'intérieur de la boîte de vitesses 2, et ainsi permettre l'engagement du rapport de vitesse souhaité par le conducteur.

Selon l'invention, le levier de sélection 6 de vitesse est formé par une plaque de tôle plane d'épaisseur constante montée mobile à pivotement autour d'un axe de pivotement 13 solidaire du carter 5 de la boîte de vitesses. Le levier de sélection 6 présente une forme générale en V dont la base est montée pivotante sur l'axe de pivotement 13 et dont les deux branches comportent respectivement les deux rotules 9 et 11 faisant saillie perpendiculairement d'un même côté de la plaque du levier de sélection 6 de vitesse.

Le levier de sélection 6 est monté perpendiculairement à l'axe de pivotement 13 entre deux flasques 14, 15 parallèles montés fixes par rapport à l'axe de pivotement 13, coaxialement à cet axe. De préférence, les deux flasques 14, 15 sont constitués par deux rondelles de même diamètre externe situées de part et d'autre de la base de la plaque en V du levier de sélection 6. Les flasques sont maintenus axialement écartés l'un de l'autre le long de l'axe de pivotement par une entretoise cylindrique 16 montée fixe et concentriquement sur l'axe de pivotement 13, de sorte que la distance séparant les deux flasques 14 et 15 permette au levier de sélection 6 de pivoter autour de l'entretoise 16, suivant un jeu axial relativement faible entre les deux flasques et qui sera défini ultérieurement. De préférence, l'axe de pivotement 13 est une vis ancrée dans le carter 5 de la boîte de vitesse et enserrant les flasques parallèles entre une partie 5a de ce carter et la tête 13a de la vis. Les flasques 14, 15 enserrent donc l'entretoise 16 autour de laquelle le levier de sélection 6 est pivotant.

Afin de faciliter le mouvement de pivotement du levier de sélection 6, une bague de glissement 17 est prévue et interposée entre l'entretoise 16 et un perçage interne traversant la plaque de tôle plane du levier de sélection 6, réalisé notamment au travers de la base du levier de sélection lorsque présentant la forme en V. De manière préférentielle, cette bague de glissement 17 est solidaire de la plaque de tôle plane du levier de sélection 6.

En référence à la figure 2, l'entretoise 16 est monobloc avec l'un 15 des deux flasques parallèles, ce qui a pour avantage de faciliter le montage du dispositif de sélection 3. Dans un mode de réalisation alternatif, l'entretoise 16 et les deux flasques 14, 15 sont des pièces distinctes, simplifiant la réalisation de cet ensemble.

Le dispositif de sélection 3 selon l'invention offre l'avantage de réduire considérablement le jeu mécanique axial entre ses différents composants, évitant ainsi les remontées de vibrations désagréables du moteur au pommeau du levier de vitesses dans l'habitacle du véhicule. Cette réduction de jeu est permise par l'intervalle de tolérance réduit par construction de l'épaisseur de la plaque de tôle du levier de sélection 6. Ainsi de manière préférentielle, la plaque de tôle plane du levier de sélection 6 est laminée à froid, ce qui assure un intervalle de tolérance très faible. Par exemple pour un levier de sélection 6 dont la plaque de tôle présente une épaisseur de 4 mm, l'intervalle de tolérance est de +/- 0,06 mm sans aucun usinage. En outre, la côte de longueur de l'entretoise 16 doit avoir un intervalle de tolérance réduit, pour assurer cette réduction du jeu axial entre les pièces du dispositif de sélection 3 de vitesse.

D'autre part, le dispositif de sélection présente un jeu radial réduit car la courte longueur de l'entretoise 16 permet de réduire les jeux de fonctionnement et de limiter le basculement latéral du levier de sélection 6 relativement à l'axe de pivotement 13, par le couple lié à la distance de la rotule 11 par rapport à l'axe de pivotement 13.

Enfin, l'invention est réalisée à partir de composants de définition simple, notamment une plaque de tôle simple 6, des rondelles 14, 15, une entretoise 16 et des vis de fixation 13 classiques permettant de diminuer les coûts de fabrication et de réduire la masse ainsi que l'encombrement du dispositif de sélection 3 de vitesse.

## Revendications

1. Dispositif de sélection (3) de vitesse d'une boîte de vitesses (2) d'un véhicule, notamment automobile, comprenant un levier de sélection (6) de vitesse, relié à un levier de changement de vitesses dans l'habitacle du véhicule et monté mobile à pivotement, sous l'action du levier de changement de vitesses, autour d'un axe (13) solidaire du carter (5) de la boite de vitesses (2), le levier de sélection (6) étant formé par une plaque de tôle plane, montée perpendiculairement à l'axe de pivotement (13), **caractérisé en ce que**
le levier de sélection (3) est monté entre deux flasques (14, 15) parallèles, montés fixes sur l'axe de pivotement et axialement écartés l'un de l'autre par une entretoise (16) montée fixe et concentriquement sur l'axe de pivotement d'une distance permettant au levier de sélection (6) de pivoter, sous faible jeu entre les deux flasques parallèles (14, 15), autour de l'entretoise (16).

2. Dispositif selon la revendication 1, **caractérisé en ce que** la plaque de tôle plane du levier de sélection (6) est laminée à froid.

3. Dispositif selon la revendication 1 ou 2, **caractérisé en ce que** l'entretoise (16) est monobloc avec l'un des deux flasques (14, 15) parallèles.

4. Dispositif selon la revendication 1 ou 2, **caractérisé en ce que** l'entretoise (16) et les flasques (14, 15) parallèles sont des pièces distinctes.

5. Dispositif selon l'une quelconque des revendications 1 à 4, **caractérisé en ce qu'**une bague de glissement (17) est interposée entre l'entretoise (16) et un perçage interne de la plaque de tôle plane du levier de sélection (6).

6. Dispositif selon la revendication 5, **caractérisé en ce que** la bague de glissement (17) est solidaire de la plaque de tôle plane (6).

7. Dispositif selon l'une quelconque des revendications 1 à 6, **caractérisé en ce que** chaque flasque (14, 15) est une rondelle coaxiale à l'axe de pivotement (13).

8. Dispositif selon l'une quelconque des revendications 1 à 7, **caractérisé en ce que** l'axe de pivotement (13) est une vis enserrant les flasques parallèles entre une partie (5a) du carter de la boîte de vitesses (2) et la tête (13a) de la vis.

## Patentansprüche

1. Vorrichtung (3) zur Auswahl eines Gangs eines Schaltgetriebes (2) eines Fahrzeugs, insbesondere eines Kraftfahrzeugs, die einen Gangauswahlhebel (6) umfasst, der mit einem Gangschalthebel in dem Innenraum des Fahrzeugs verbunden und unter der Einwirkung des Gangschalthebels schwenkend beweglich um eine Achse (13), die fest mit dem Gehäuse (5) des Schaltgetriebes (2) verbunden ist, montiert ist, wobei der Auswahlhebel (6) aus einer flachen Blechplatte gebildet ist, die senkrecht zu der Schwenkachse (13) montiert ist, **dadurch gekennzeichnet, dass**
der Auswahlhebel (3) zwischen zwei parallelen Flanschen (14, 15) montiert ist, die stationär auf der Schwenkachse montiert und axial voneinander durch einen Abstandhalter (16) abgespreizt sind, der stationär und konzentrisch auf der Schwenkachse mit einem Abstand montiert ist, der es dem Auswahlhebel (6) erlaubt, mit geringem Spiel zwischen den zwei parallelen Flanschen (14, 15) um den Abstandhalter (16) zu schwenken.

2. Vorrichtung nach Anspruch 1, **dadurch gekennzeichnet, dass** die flache Blechplatte des Auswahlhebels (6) kalt gewalzt ist.

3. Vorrichtung nach Anspruch 1 oder 2, **dadurch gekennzeichnet, dass** der Abstandhalter (16) aus einem Stück mit einem der zwei parallelen Flansche (14, 15) besteht.

4. Vorrichtung nach Anspruch 1 oder 2, **dadurch gekennzeichnet, dass** der Abstandhalter (16) und ist parallelen Flansche (14, 15) separate Teile sind.

5. Vorrichtung nach einem der Ansprüche 1 bis 4, **dadurch gekennzeichnet, dass** ein Gleitring (17) zwischen den Abstandhalter (16) und eine interne Bohrung der flachen Blechplatte des Auswahlhebels (6) eingefügt ist.

6. Vorrichtung nach Anspruch 5, **dadurch gekennzeichnet, dass** der Gleitring (17) fest mit der flachen Blechplatte (6) verbunden ist.

7. Vorrichtung nach einem der Ansprüche 1 bis 6, **dadurch gekennzeichnet, dass** jeder Flansch (14, 15) eine Unterlegscheibe ist, die mit der Schwenkachse (13) koaxial ist.

8. Vorrichtung nach einem der Ansprüche 1 bis 7, **dadurch gekennzeichnet, dass** die Schwenkachse (13) eine Schraube ist, die die parallelen Flansche zwischen einem Teil (5a) des Gehäuses des Schaltgetriebes (2) und dem Kopf (13a) der Schraube einspannt.

## Claims

1. A gear selector device (3) for a gearbox (2) of a vehicle, in particular a motor vehicle, including gear selector lever (6), connected to a gear change lever in the passenger compartment of the vehicle and mounted in a pivotally movable manner, under the action of the gear change lever, about an axis (13) integral with the housing (5) of the gearbox (2), the selector lever (6) being formed by a flat sheet-metal plate, mounted perpendicularly to the pivot axis (13), **characterized in that**
the selector lever (3) is mounted between two parallel flanges (14, 15), mounted in a fixed manner on the pivot axis and spaced apart axially from one another by a spacer (16) mounted in a fixed manner and concentrically on the pivot axis by a distance permitting the selector lever (6) to pivot, with a small amount of play between the two parallel flanges (14, 15), around the spacer (16).

2. The device according to claim 1, **characterized in that** the flat sheet-metal plate of the selector lever (6) is cold-rolled.

3. The device according to claim 1 or 2, **characterized in that** the spacer (16) is in a single piece with one of the two parallel flanges (14, 15).

4. The device according to claim 1 or 2, **characterized in that** the spacer (16) and the parallel flanges (14, 15) are distinct pieces.

5. The device according to any one of claims 1 to 4, **characterized in that** a slide ring (17) is interposed between the spacer (16) and an internal bore of the flat sheet-metal plate of the selector lever (6).

6. The device according to claim 5, **characterized in that** the slide ring (17) is integral with the flat sheet-metal plate (6).

7. The device according to any one of claims 1 to 6, **characterized in that** each flange (14, 15) is a washer coaxial to the pivot axis (13).

8. The device according to any one of claims 1 to 7, **characterized in that** the pivot axis (13) is a screw clamping the parallel flanges between a part (5a) of the housing of the gearbox (2) and the head (13a) of the screw.
